# EUROPEAN PATENT SPECIFICATION

(11) **EP 2 541 105 B1**
(45) Date of publication and mention of the grant of the patent: **19.02.2020**
(21) Application number: 12173591.4
(22) Date of filing: 26.06.2012
(51) Int. Cl.: C09J 7/38, C09J 11/06, F16J 15/02, B32B 7/12, B32B 27/08, B32B 27/18, B32B 27/32, C09J 175/04, C08G 65/336

(54) **Gasket**
Dichtung
Joint d'étanchéité

(30) Priority: 27.06.2011 US 201161501401 P
(43) Date of publication of application: 02.01.2013
(60) Divisional application: 20151928.7
(73) Proprietor: Nitto Denko Corporation, Osaka 567-8680 (JP)
(72) Inventor: Kabutoya, Ryuuichi, Ibaraki-shi, Osaka 567-8680 (JP); Hirose, Tetsuya, Ibaraki-shi, Osaka 567-8680 (JP)
(74) Representative: Grünecker Patent- und Rechtsanwälte PartG mbB

(56) References cited:
- EP-A2- 2 141 015
- EP-A2- 2 341 113
- EP-A2- 2 541 104
- WO-A1-90/13416
- WO-A2-2008/005816
- JP-A- 2003 292 926
- US-A1- 2008 241 452

## Description

### TECHNICAL FIELD OF THE INVENTION

The present invention relates to a flame retardant gasket having superior sealability that does not produce toxic halogen gas during combustion.

### BACKGROUND OF THE INVENTION

Conventionally, to prevent seepage of liquid or gas between two opposing faces in various machines and apparatuses or other structures, a gasket is set between the two opposing faces.

For example, an antenna to aid communication between aircrafts and distant places is set on the outer surface of the body wall (outer board) of the aircrafts. Many of such antennas have a plate-like fixing board having an electric connector protruding from one surface thereof. The surface of the fixing board having the protruding electric connector is superposed on the outer face of the outer board, the connector is inserted into the inside of an aircraft from the hole formed on the outer board of the aircraft, and connected to an appropriate electric circuit in the aircraft. In this case, the fixing board of the antenna is generally installed removably with a bold on the outer board of the aircraft, where a gasket is set between the outer face of the outer board and the inner face of the antenna fixing board to seal the antenna fixing board.

To be specific, a bold hole is formed at the corresponding positions of the antenna fixing board and the outer board of an aircraft, a gasket having a through-hole formed at a position corresponding to the bold hole in the antenna fixing board and the outer board of the aircraft is placed between them, a bold is inserted from the outside of the antenna fixing board into the through-hole of the antenna fixing board, the gasket and the outer board of the aircraft, and a blind nut is set on the inner face of the outer board of the aircraft, whereby the antenna is fixed. In so doing, the gasket is compressed by the deformation of the fixing board due to bolding, which in turn provides a seal of the bold and the bold pore, as well as the outer board of the aircraft and the fixing board. Consequently, penetration of moisture into the aircraft can be prevented.

As a gasket used for sealing such an antenna fixing member on the outer board of an aircraft, for example, US 2004/0070156 A1 proposes a gasket material wherein an adhesive layer of a flexible polyurethane gel is formed on both the front and the back of a carrier sheet (substrate sheet). This publication describes that a gasket having an adhesive layer of a polyurethane gel maintains superior sealing property, since polyurethane gel is superior in the flexibility, elasticity, compressibility, flexibility and the like, and nonreactive with the constituent materials (specifically aluminum etc.) of the outer board of aircrafts and antenna fixing board, and water (including brine).

There are many structures comprising two members with each surface facing the other surface (that is, forming a mating face of each of the two opposing faces), which are fixed not only at the fixing part of function articles on the above-mentioned outer board of an aircraft but also inside the aircraft. Such gasket to be applied between two mating faces inside an aircraft is strongly requested to show superior sealability against not only humidity but also liquid such as water and the like.

In addition, in general, aircraft members are required to have high flame retardancy. Therefore, gasket is also requested to have high flame retardancy, and contains a halogenated flame retardant showing high flame retardancy. Although a gasket containing a halogenated flame retardant shows high flame retardancy, it produces a large amount of toxic halogen gas during molding processing and combustion to possibly corrode instruments and adversely influence human body and environment. Therefore, a gasket showing high flame retardancy, which does not generate toxic halogen gas during combustion, has been demanded.

EP 2141015 A2 discloses a gasket material to be placed between two opposing faces to provide a tight closure between them. The gasket material comprises a substrate sheet and an adhesive layer formed on both faces of the sheet.

### SUMMARY OF THE INVENTION

The present invention has been made in view of the above-mentioned situation and aims to provide a gasket having good sealing property (particularly good sealing property against liquid), as well as high flame retardancy which does not produce a toxic halogen gas during combustion.

The present inventors have conducted intensive studies in an attempt to solve the aforementioned problems and found that an adhesive sheet obtained by forming an adhesive layer comprised of an adhesive composition of a non-halogen flame retardant being a phosphorus flame-retardant blended with polyoxyalkylene, acrylic or silicone adhesive and the like on both faces of a nonporous core film also shows superior sealing property against liquid such as water and the like and can provide a gasket with sufficiently high flame retardancy. Further studies based on such finding have resulted in the completion of the present invention.

Accordingly, the present invention provides the following.
[1] A gasket mainly comprising a non-halogen flame retardant-containing adhesive sheet, wherein
   at least one surface of the gasket is an adhesive face of the aforementioned non-halogen flame retardant-containing adhesive sheet,
   the aforementioned non-halogen flame retardant-containing adhesive sheet is an adhesive sheet wherein a non-halogen flame retardant-containing adhesive layer/a nonporous core film/a non-halogen flame retardant-containing adhesive layer are laminated in this order,
   a primer layer is formed on at least one surface of the nonporous core film, and
   the non-halogen flame retardant is a phosphorus flame retardant selected from phosphates, aromatic condensed phosphates and ammonium polyphosphates.
[2] The gasket according to item [1], wherein the nonporous core film comprises a plastic film.
[3] The gasket according to item [1], wherein the primer layer is polyester polyurethane.
[4] The gasket according to item [1], wherein the nonporous core film has a thickness of 10 - 70 µm.
[5] The gasket according to item [1], wherein a substrate sheet is laminated on one surface of the non-halogen flame retardant-containing adhesive sheet,
   one surface of the gasket is a surface of the substrate sheet, and the other surface of the gasket is an adhesive face of the non-halogen flame retardant-containing adhesive sheet.
[6] The gasket according to item [5], wherein the substrate sheet is a fluororesin sheet.
[7] The gasket according to item [1], wherein both faces of the gasket comprise an adhesive face of the non-halogen flame retardant-containing adhesive sheet.
[8] The gasket according to item [1], wherein the non-halogen flame retardant-containing adhesive layer comprises a tackifier resin.
[9] The gasket according to item [8], wherein the tackifier resin is a terpene tackifier resin and/or a rosin tackifier resin.
[10] The gasket according to item [1], wherein the non-halogen flame retardant-containing adhesive layer is a non-halogen flame retardant-containing polyoxyalkylene adhesive layer.
[11] The gasket according to item [10], wherein the non-halogen flame retardant-containing polyoxyalkylene adhesive layer is a cured product layer of a composition comprising the following components A - D:
   A: a polyoxyalkylene polymer having at least one alkenyl group in one molecule
   B: a compound containing two or more hydrosilyl groups on average in one molecule
   C: a hydrosilylation catalyst
   D: a non-halogenated flame retardant.
[12] A method of tightly sealing two opposing faces, comprising placing the gasket according to item [1] between the two opposing faces.

According to the present invention, a highly flame-retardant gasket exhibiting superior sealability against liquid such as water and the like, which does not produce a toxic halogen gas during combustion, can be realized.

In addition, a highly flame-retardant gasket affording the aforementioned superior effect, which does not cause corrosion and discoloration of a metal member to be an adherend, can be realized.

Moreover, a gasket affording the aforementioned superior effect and extremely high flame-retardance satisfying, for example, grade V-1 (preferably V-0) or above in the standard "UL-94" of US UL (Underwriters Laboratories) can be realized.

### BRIEF DESCRIPTION OF THE DRAWINGS

Fig. 1 is a schematic sectional view of a conventional gasket.
Fig. 2 is a schematic sectional view of the gasket of Fig. 1 placed between two adherends, with tightly sealed two opposing faces.
Fig. 3 is a schematic sectional view of a gasket according to the present invention.
Fig. 4(A) - Fig. 4(C) are schematic diagrams showing the production steps of the gasket shown in Fig. 1.
Fig. 5(A) is a schematic diagram of a gasket in a roll state and Fig. 5(B) is a partly enlarged sectional view of the gasket shown in Fig. 5(A).
Fig. 6(A) is an explanatory chart of a gasket used for a water stop test, and Fig. 6(B) is a schematic diagram of a measurement sample of the water stop test.

In the Figures, 1 is a non-halogen flame retardant-containing adhesive layer, 2 is a nonporous core film, 4 is a substrate sheet, 5 is a non-halogen flame retardant-containing adhesive sheet, 6 is a primer layer, 10 is a gasket, 10A, 10B are surfaces of the gasket to be closely adhered to adherends, and 20, 21 are adherends.

### DETAILED DESCRIPTION OF THE INVENTION

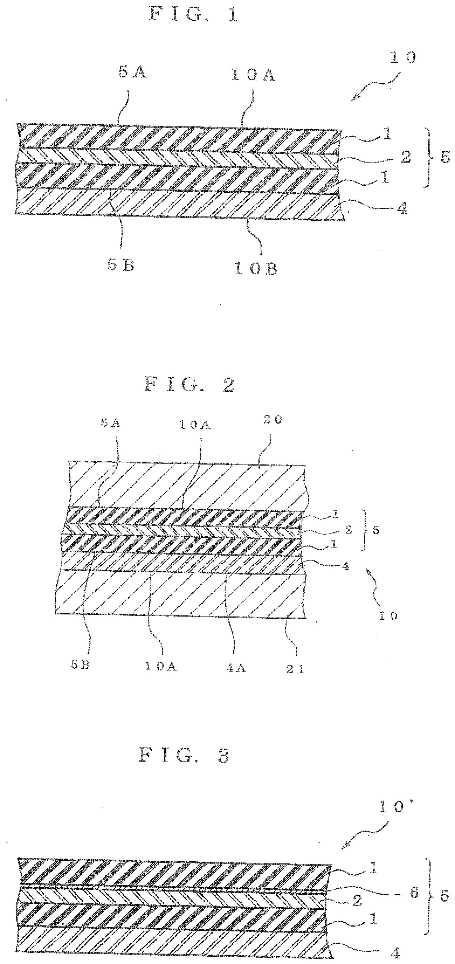

Fig. 1 is a schematic sectional view of a conventional gasket 10, and Fig. 2 is a schematic sectional view of the gasket 10 of Fig. 1 placed between two adherends, with tightly sealed two opposing faces.

The gasket 10 mainly comprises, as shown in the figures, a pressure-sensitive adhesive sheet 5 containing a non-halogen flame retardant-containing adhesive layer 1, and is placed between opposing faces of two adherends 20, 21 during use (i.e., between opposing faces of the two surfaces) (Fig. 2).

At least one of both surfaces 10A, 10B of the gasket to be closely adhered to adherends 20, 21 (i.e., at least one surface of gasket) is a pressure-sensitive adhesive face 5A of the pressure-sensitive adhesive sheet 5. Since the face 5A of the pressure-sensitive adhesive sheet 5 adheres to the adherend 20, gasket 10 is arranged between the opposing faces of the two adherends 20, 21 without misalignment.

In gasket 10, a substrate sheet 4 is laminated on an adhesive face 5B of adhesive faces 5A and 5B of the non-halogen flame retardant-containing adhesive sheet 5, and a surface 4A of a substrate sheet 4 is closely adhered to an adherend 21. The gasket may be, however, constituted solely with a non-halogen flame retardant-containing adhesive sheet 5 without laminating a substrate sheet 4 on the non-halogen flame retardant-containing adhesive sheet 5, and the adhesive faces on the front and the back of the non-halogen flame retardant-containing adhesive sheet 5 may be respectively adhered to two adherends.

In the gasket, the non-halogen flame retardant-containing adhesive sheet 5 comprises, as shown in Fig. 1, non-halogen flame retardant-containing adhesive layer 1/nonporous core film 2/non-halogen flame retardant-containing adhesive layer 1 laminated in this order, and contains a nonporous core film 2 in the inside. As a result, it shows superior resistance to water permeability, and an undesired deformation between the opposing faces of two adherends 20, 21 (i.e., between the two mating faces) is not developed easily. Thus, the gasket shows improved tight-sealing property against liquid such as water and the like and can prevent liquid leakage at a higher level, as compared to a gasket using an adhesive sheet having no core film, a gasket using an adhesive sheet made of a fiber such as knitted fabric, woven fabric, non-woven fabric and the like and a gasket using an adhesive sheet having a core film made of a plastic film after a perforation treatment.

In addition, the gasket preferably has a constitution wherein, as in the gasket 10 of the above-mentioned one embodiment, one surface 10A is the adhesive face 5A of the non-halogen flame retardant-containing adhesive sheet 5 and the other surface 10B is a surface 4A of the substrate sheet 4. A gasket of such embodiment affords improved uniform adhesion of the gasket to two adherends 20, 21, and maintains superior tight-sealing property for a long term. To be specific, the gasket is generally applied (fixed) between the opposing faces of two adherends (i.e., between the two mating faces) by interposing the gasket between the opposing faces of two adherends 20, 21 (i.e., between the two mating faces), bolting the two adherends and the like. Since the non-halogen flame retardant-containing adhesive sheet 5 has a nonporous core film 2, and the non-halogen flame retardant-containing adhesive sheet 5 is integrated with a substrate sheet 4, the gasket can maintain a uniform shape even when pressurized with a high pressure between the opposing faces of two adherends (i.e., between the two mating faces). As a result, uniform adhesion of the gasket to an adherend can be maintained for a long term, and superior tight-sealing property can be maintained.

### [Non-halogen flame retardant-containing adhesive sheet]

In the non-halogen flame retardant-containing adhesive sheet 5, non-halogen flame retardant-containing adhesive layer 1/nonporous core film 2/non-halogen flame retardant-containing adhesive layer 1 are laminated in this order.

### <Nonporous core film>

While the material of the nonporous core film 2 is not particularly limited, it is a single layer or laminate plastic film, metal foil and the like made of one or more kinds selected from polyester (e.g., poly(ethylene terephthalate) (PET) and the like); nylon; polyvinyl chloride; polyvinylidene chloride; polyolefin (e.g., polyethylene, polypropylene, reactor TPO, ethylene-vinyl acetate copolymer and the like); fluororesin (e.g., polytetrafluoroethylene (PTFE), polychlorotrifluoroethylene (PCTFE), polyvinylidene fluoride (PVDF), polyvinyl fluoride (PVF), perfluoroalkoxy fluororesin (PFA), tetrafluoroethylene hexafluoropropylene copolymer (FEP), ethylene tetrafluoroethylene copolymer (ETFE), ethylene chlorotrifluoroethylene copolymer (ECTFE) and the like) and the like. It may be a laminate film of a plastic film and a metal foil, with preference given to a plastic film. The "nonporous film" means a solid film excluding net cloth, woven fabric, non-woven fabric, mesh film (sheet), film (sheet) after a perforation treatment and the like. The "nonporous" of the "nonporous film" means that a pore is not substantially formed, and a film having a small undesired pore formed due to a flaw etc. is encompassed in the "nonporous film". Since the non-halogen flame retardant-containing adhesive sheet has a nonporous core film in the inside, shape retention property, moisture barrier property and the like of the gasket are improved.

The gasket before being set between mating faces of two surfaces is generally stored in a roll state. After production, the gasket is wound in a roll state. When the core film has a large thickness, core film 2 and adhesive layer 1 are partially separated during winding of the gasket to form a gap, which leads to the degradation of sealing property and appearance of the gasket. Accordingly, the core film 2 is preferably comparatively thin from the aspects of appearance of gasket, sealing property of gasket, positioning workability of gasket during setting and the like. Subject to change due to the material of the film, the thickness of the thickness of the core film 2 is generally preferably 70 µm or less, more preferably 40 µm or less. When the thickness of the core film 2 is too thin, degradation of sealing property, degradation of re-peeling workability, lamination defect and the like tend to occur. Therefore, the thickness of the core film 2 is preferably 10 µm or above, more preferably 12 µm or above.

### <Non-halogen flame retardant-containing adhesive layer>

The non-halogen flame retardant-containing adhesive layer can be formed from an adhesive composition of a blend of a pressure-sensitive adhesive and a non-halogen flame retardant. While the pressure-sensitive adhesive is not particularly limited, those capable of forming a pressure-sensitive adhesive layer superior in the elasticity, compressibility and adhesion are preferable. For example, acrylic, silicone or polyoxyalkylene adhesives can be mentioned. Among these, polyoxyalkylene adhesive is superior in the elasticity, compressibility and adhesion, and can form a pressure-sensitive adhesive layer superior in the removability. Use of the polyoxyalkylene adhesive is preferable, since a gasket can be easily separated from an adherend during maintenance.

### (Acrylic adhesive)

Specifically, as the acrylic adhesive, an acrylic adhesive containing, as a base polymer, an acrylic polymer with a monomer unit of alkyl(meth)acrylate as a main backbone is preferable (here, the "(meth)acrylate" means "acrylate and/or methacrylate").

The average carbon number of the alkyl group of the alkyl(meth)acrylate constituting the main backbone of the acrylic polymer is preferably 1 to 18. Specific examples of such alkyl(meth)acrylate include methyl(meth)acrylate, ethyl(meth)acrylate, n-butyl(meth)acrylate, 2-ethylhexyl(meth)acrylate, isooctyl(meth)acrylate, isononyl (meth)acrylate, lauryl (meth)acrylate and the like. One or more kinds of these are used in combination. Among these, alkyl(meth)acrylate wherein the carbon number of the alkyl group is 1 to 12 is preferable.

One or more kinds of various monomers may be introduced into an acrylic polymer by copolymerization to improve adhesiveness to an adherend and heat resistance of the pressure-sensitive adhesive sheet containing a non-halogen flame retardant. Specific examples of such copolymerizable monomer include monomers containing a hydroxyl group such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl (meth)acrylate and the like; monomers containing a carboxyl group such as (meth)acrylic acid, carboxyethyl(meth)acrylate, carboxypentyl(meth)acrylate, itaconic acid, maleic acid, fumaric acid, crotonic acid and the like; monomers containing an acid anhydride group such as maleic anhydride, itaconic anhydride and the like; caprolactone adduct of acrylic acid; monomers containing a sulfo group such as styrenesulfonic acid, allylsulfonic acid, 2-(meth)acrylamide-2-methylpropanesulfonic acid, (meth)acrylamidepropanesulfonic acid, sulfopropyl (meth)acrylate, (meth)acryloyloxynaphthalenesulfonic acid and the like; monomers containing a phosphate group such as acrylate 2-(phosphonooxy)ethyl etc., and the like. In addition, nitrogen containing vinyl monomers can be mentioned, for example, maleimide, N-cyclohexylmaleimide, N-phenylmaleimide; N-acryloylmorpholine; (N-substitution)amide monomers such as (meth)acrylamide, N,N-dimethyl(meth)acrylamide, N,N-diethyl(meth)acrylamide, N-hexyl(meth)acrylamide, N-methyl(meth)acrylamide, N-butyl(meth)acrylamide, N-butyl(meth)acrylamide, N-methylol(meth)acrylamide, N-methylolpropane(meth)acrylamide and the like; alkylaminoalkyl (meth)acrylate monomers such as aminoethyl (meth)acrylate, aminopropyl (meth)acrylate, N,N-dimethylaminoethyl (meth)acrylate, t-butylaminoethyl (meth)acrylate, 3-(3-pyridinyl)propyl(meth)acrylate and the like; alkoxyalkyl (meth)acrylate monomers such as methoxyethyl (meth)acrylate, ethoxyethyl (meth)acrylate and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide, N-acryloylmorpholine etc., and the like can be mentioned.

Furthermore, vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, N-vinylcaprolactam and the like; cyanoacrylate monomers such as acrylonitrile, methacrylonitrile and the like; epoxy group-containing acrylic monomers such as glycidyl (meth)acrylate and the like; glycol acrylate monomers such as polyethylene glycol (meth)acrylate, polypropylene glycol (meth)acrylate, methoxyethyleneglycol (meth)acrylate, methoxypolypropyleneglycol (meth)acrylate and the like; acrylate monomers such as tetrahydrofurfuryl (meth)acrylate, fluorine-containing (meth)acrylate, silicone (meth)acrylate, 2-methoxyethylacrylate etc., and the like can also be mentioned.

Among these, when an isocyanate based crosslinking agent is used as a crosslinking agent, a hydroxyl group-containing monomer is preferable since the reactivity with the isocyanate group is good. Carboxyl group-containing monomers such as (meth)acrylic acid and the like are preferable and acrylic acid is particularly preferable in view of the adhesiveness of the pressure-sensitive adhesive sheet containing a non-halogen flame retardant to an adherend, adhesion durability, weatherability and the like.

The weight ratio of the copolymerizable monomer in the acrylic polymer is preferably 0.1 - 10 wt%.

While the average molecular weight of the acrylic polymer is not particularly limited, the weight average molecular weight is generally 300,000 to 2,500,000.

Acrylic polymers are produced by various known methods and, for example, radical polymerization methods such as bulk polymerization method, solution polymerization method, suspension polymerization method and the like can be appropriately employed. As a radical polymerization initiator, various known azo based initiators and peroxide based initiators can be used. The reaction temperature is generally 50 to 80°C, and the reaction time is 1 to 8 hr.

The acrylic adhesive can contain a crosslinking agent in addition to a base polymer, and the crosslinking agent can improve adhesion to an optical plate and durability, and can provide reliability at a high temperature and maintain the form of the adhesive itself. As the crosslinking agent, a known crosslinking agent such as isocyanate based crosslinking agents, epoxy based crosslinking agents, peroxide based crosslinking agents, metal chelate based crosslinking agents, oxazoline based crosslinking agents and the like can be appropriately used. One or more kinds of these crosslinking agents can be used in combination. The amount of the crosslinking agent to be used is not more than 10 parts by weight, preferably 0.01 - 5 parts by weight, more preferably 0.02 - 3 parts by weight, relative to 100 parts by weight of the acrylic polymer. A ratio of the crosslinking agent exceeding 10 parts by weight is not preferable, since crosslinking may proceed too much to decrease adhesiveness.

### (Silicone adhesive)

The silicone adhesive is not particularly limited, and peroxide crosslinked silicone adhesives (peroxide curable silicone adhesive) and addition reaction silicone adhesives, which are generally used, can be preferably used. These peroxide crosslinked silicone adhesives and addition reaction silicone adhesives may be commercially available products. Specific examples of the peroxide crosslinked silicone adhesive include KR-3006A/BT manufactured by Shin-Etsu Chemical Co., Ltd., SH 4280 PSA manufactured by Toray Dow Corning Corporation Silicone and the like. Specific examples of the addition reaction silicone adhesive include X-40-3501 manufactured by Shin-Etsu Chemical Co., Ltd., BY 24-712 manufactured by Toray Dow Corning Corporation Silicone, TSE32X manufactured by Momentive Performance Materials Inc and the like.

### (Polyoxyalkylene adhesive)

As the polyoxyalkylene adhesive, a cured product of a composition containing the following components A - C is preferable:
A: a polyoxyalkylene polymer having at least one alkenyl group in each molecule
B: a compound containing two or more hydrosilyl groups on average in each molecule
C: a hydrosilylation catalyst.

The above-mentioned "polyoxyalkylene polymer having at least one alkenyl group in each molecule" for component A is not particularly limited, and various polymers can be used. However, one wherein the main chain of the polymer has a repeat unit represented by the formula (1) shown below is preferable:

formula (1) : -R¹-O-

wherein R¹ is an alkylene group.

R¹ is preferably a linear or branched alkylene group having 1 to 14, more preferably 2 to 4, carbon atoms.

As specific examples of the repeat unit represented by the general formula (1), -CH₂O-, -CH₂CH₂O-, -CH₂CH(CH₃)O-,-CH₂CH(C₂H₅)O-, -CH₂C(CH₃)₂O-, -CH₂CH₂CH₂CH₂O- and the like can be included. The main chain skeleton of the polyoxyalkylene polymer may consist of only one kind of repeat unit, and may consist of two kinds or more of repeat units. Particularly, from the aspects of availability and workability, a polymer having-CH₂CH(CH₃)O- as a main repeat unit is preferable. In the main chain of the polymer, a repeat unit other than the oxyalkylene group may be contained. In this case, the total sum of oxyalkylene units in the polymer is preferably not less than 80% by weight, particularly preferably not less than 90% by weight.

Although the polymer of component A may be a linear polymer or a branched polymer, or a mixture thereof, it preferably contains a linear polymer in a proportion of not less than 50% by weight, so that the adhesive layer will show good adhesiveness to the surface of various materials.

The molecular weight of the polymer of component A is preferably 500 to 50,000, more preferably 5,000 to 30,000, in terms of number-average molecular weight. When the number average molecular weight is less than 500, the obtained cured product tends to be too brittle, and when the number average molecular weight exceeds 50,000, the viscosity becomes unfavorably too high to markedly decrease workability. The number average molecular weight here means the value obtained by Gel Permeation Chromatography (GPC) method.

The polymer of component A preferably has a narrow molecular weight distribution wherein the ratio of weight-average molecular weight and number-average molecular weight (Mw/Mn) is not more than 1.6; a polymer having an Mw/Mn of not more than 1.6 produces a decreased viscosity of the composition and offers improved workability. Hence, the Mw/Mn is more preferably not more than 1.5, still more preferably not more than 1.4. As mentioned herein, Mw/Mn refers to a value obtained by the gel permeation chromatography (GPC) method.

Here, the molecular weight (based on polystyrene) is measured by the GPC method using GPC apparatus (HLC-8120GPC) manufactured by Tosoh Corporation, where the measurement conditions are as follows.
sample concentration: 0.2 wt% (THF solution)
sample injection volume: 10 µl
eluent: THF
flow rate: 0.6 ml/min
measurement temperature: 40°C
column: sample column TSKgel GMH-H(S)
detector: differential refractometer

With regard to the polymer of component A (polyoxyalkylene polymer having at least one alkenyl group in each molecule), the alkenyl group is not subject to limitation, but an alkenyl group represented by the formula (2) shown below is suitable:

formula (2): H₂C=C(R²)-

wherein R² is hydrogen or a methyl group.

The mode of binding of the alkenyl group to the polyoxyalkylene polymer is not subject to limitation; for example, alkenyl group direct bond, ether bond, ester bond, carbonate bond, urethane bond, urea bond and the like can be included.

As specific examples of the polymer of component A, a polymer represented by the general formula (3) : {H₂C=C(R^{3a})-R^{4a}-O}a₁R^{5a}
wherein R^{3a} is hydrogen or a methyl group; R^{4a} is a divalent hydrocarbon group having 1 to 20 carbon atoms, optionally having one or more ether groups, R^{5a} is a polyoxyalkylene polymer residue; a₁ is a positive integer,
can be included. As R^{4a} in the formula, specifically, -CH₂-,-CH₂CH₂-, -CH₂CH₂CH₂-, -CH₂CH(CH₃)CH₂-, -CH₂CH₂CH₂CH₂-, -CH₂CH₂OCH₂CH₂-, or -CH₂CH₂OCH₂CH₂CH₂- and the like can be included; for the ease of synthesis, -CH₂- is preferable.

A polymer having an ester bond, represented by the formula (4) : {H₂C=C(R^{3b})-R^{4b}-OCO}a₂R^{5b}
wherein R^{3b}, R^{4b}, R^{5b} and a₂ have the same definitions as those of R^{3a}, R^{4a}, R^{5a}, and a₁, respectively,
can also be included.

A polymer represented by the formula (5) : {H₂C=C(R^{3c})}a₃R^{5c} wherein R^{3c}, R^{5c} and a₃ have the same definitions as those of R^{3a}, R^{5a}, and a₁, respectively,
can also be included.

Furthermore, a polymer having a carbonate bond, represented by the formula (6) : {H₂C=C(R^{3d})-R^{4d}-O(CO)O}a₄R^{5d} wherein R^{3d}, R^{4d}, R^{5d} and a₄ have the same definitions as those of R^{3a}, R^{4a}, R^{5a} and a₁, respectively,
can also be included.

It is preferable that at least 1, preferably 1 to 5, more preferably 1.5 to 3, alkenyl groups be present in each molecule of the polymer of component A. If the number of alkenyl groups contained in each molecule of the polymer of component A is less than 1, the curing is insufficient; if the number exceeds 5, the mesh structure becomes so dense that the polymer sometimes fails to exhibit a good adherence. The polymer of component A can be synthesized according to the method described in JP-A-2003-292926, and any commercially available product can be used.

Particularly preferable embodiment of the polymer of component A includes terminal allylation polyoxypropylene wherein an allyl group is bonded to both terminals of polypropylene glycol.

Any component B compound containing two or more hydrosilyl groups on average in each molecule can be used without limitation, as long as it has a hydrosilyl group (a group having an Si-H bond), but from the viewpoint of the ease of obtainment of raw materials and compatibility with the component A, an organohydrogen polysiloxane modified with an organic constituent is particularly preferable. The aforementioned polyorganohydrogen siloxane modified with an organic constituent more preferably has an average of 2 to 8 hydrosilyl groups in each molecule. Specific examples of the structure of the polyorganohydrogen siloxane include linear or cyclic ones represented by, for example: 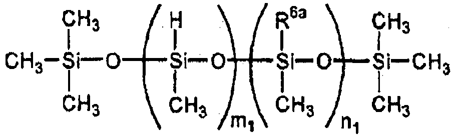 wherein 2≤m₁+n₁≤50, 2≤m₁, and 0≤n₁, R^{6a} is a hydrocarbon group having 2 to 20 carbon atoms in the main chain thereof, optionally comprising one or more phenyl groups, 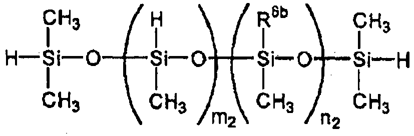 wherein 0≤m₂+n₂≤50, 0≤m₂, and 0≤n₂, R^{6b} is a hydrocarbon group having 2 to 20 carbon atoms in the main chain thereof, optionally comprising one or more phenyl groups, 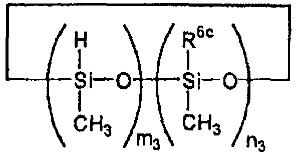 wherein 3≤m₃+n₃≤20, 2≤m₃≤19, and 0≤n₃<18, R^{6c} is a hydrocarbon group having 2 to 20 carbon atoms in the main chain thereof, optionally having one or more phenyl groups, and the like, and ones having two or more of these units, represented by the following: 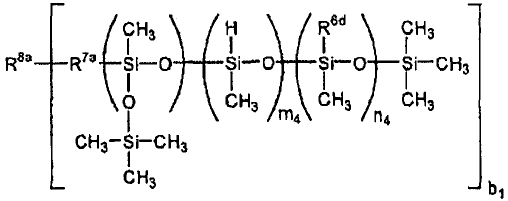 wherein 1≤m₄+n₄≤50, 1≤m₄, and 0≤n₄, R^{6d} is a hydrocarbon group having 2 to 20 carbon atoms in the main chain thereof, optionally having one or more phenyl groups, 2≤b₁, R^{8a} is a divalent to tetravalent organic group, and R^{7a} is a divalent organic group, but R^{7a} may be absent depending on the structure of R^{8a}, 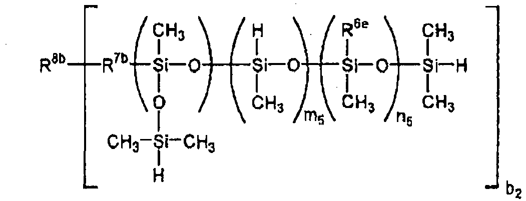 wherein 0≤m₅+n₅≤50, 0≤m₅, and 0≤n₅, R₆ₑ is a hydrocarbon group having 2 to 20 carbon atoms in the main chain thereof, optionally having one or more phenyl groups, 2≤b₂, R^{8b} is a divalent to tetravalent organic group, and R^{7b} is a divalent organic group, however, R^{7b} may be absent depending on the structure of R^{8b}, or 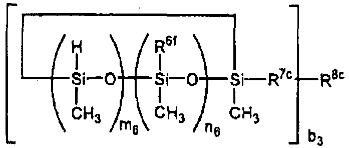 wherein 3≤m₆+n₆≤50, 1≤m₆, and 0≤n₆, R^{6f} is a hydrocarbon group having 2 to 20 carbon atoms in the main chain thereof, optionally comprising one or more phenyl groups, 2≤b₃, R^{8c} is a divalent to tetravalent organic group, and R^{7c} is a divalent organic group, however, R^{7c} may be absent depending on the structure of R^{8c}, and the like.

The "compound containing two or more hydrosilyl groups on average in each molecule" for component B preferably has good compatibility with the component A and the component C, or good dispersion stability in the system. Particularly, if the viscosity of the entire system is low, use of an ingredient whose compatibility with any of the above-described ingredients is low as the component B sometimes causes phase separation and a curing failure.

As a specific example of the component B having relatively good compatibility with the component A and the component C, or relatively good dispersion stability, the following can be included. 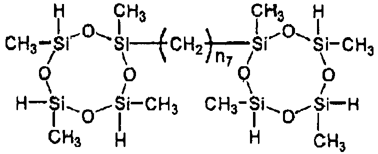 wherein n₇ is an integer of not less than 4 and not more than 10, 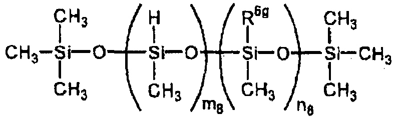 wherein 2≤m₈≤10 and 0≤n₈≤5, R^{6g} is a hydrocarbon group having eight or more carbon atoms.

As specific preferable examples of the component B, polymethylhydrogen siloxane can be included; for assuring compatibility with the component A and adjusting the SiH content, a compound modified with α-olefin, styrene, α-methylstyrene, allylalkyl ether, allylalkyl ester, allylphenyl ether, allylphenyl ester or the like can be included; as an example, the following structure can be included. 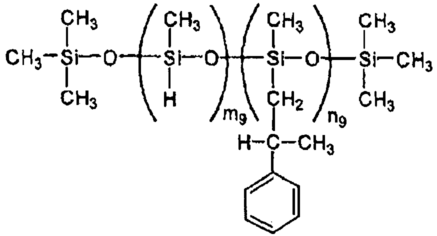 wherein 2≤m₉≤20 and 1≤n₉≤20.

The component B can be synthesized by a commonly known method, and any commercially available product can be used.

In the present invention, the component C "hydrosilylation catalyst" is not subject to limitation; an optionally chosen one can be used. As specific examples, chloroplatinic acid; platinum; solid platinum carried by a carrier such as alumina, silica, or carbon black; a platinum-vinylsiloxane complex {for example, Ptₙ(ViMe₂SiOSiMe₂Vi)ₘ, Pt[(MeViSiO)₄]ₘ and the like}; a platinum-phosphine complex {for example, Pt(PPh₃)₄, Pt(PBu₃)₄ and the like}; a platinum-phosphite complex {for example, Pt[P(OPh)₃]₄, Pt[P(OBu)₃]₄ and the like}; Pt(acac)₂; the platinum-hydrocarbon conjugates described in US Patent 3159601 and 3159662 of Ashby et al.; the platinum alcoholate catalyst described in US Patent 3220972 of Lamoreaux et al. and the like can be included. (In these formulas, Me represents a methyl group, Bu represents a butyl group, Vi represents a vinyl group, Ph represents a phenyl group, acac represents an acetylacetonate, and each of n and m represents an integer.)

As examples of catalysts other than platinum compounds, RhCl(PPh₃)₃, RhCl₃, Rh/Al₂O₃, RuCl₃, IrCl₃, FeCl₃, AlCl₃, PdCl₂•2H₂O, NiCl₂, TiCl₄ and the like can be included.

These catalysts may be used alone, and may be used in combination of 2 kinds or more. With regard to catalyst activity, chloroplatinic acid, a platinum-phosphine complex, a platinum-vinylsiloxane complex, Pt(acac)₂ and the like are preferable.

Although the amount of the component C formulated is not subject to limitation, from the viewpoint of assurance of composition potlife and transparency of the cured product (adhesive layer), the amount is generally not more than 1x10⁻¹ mol, preferably not more than 5.3x10⁻² mol, relative to 1 mol of alkenyl groups in the component A; particularly, from the viewpoint of transparency of the cured product (adhesive layer), the amount is more preferably not more than 3.5x10⁻² mol, particularly preferably not more than 1.4x10⁻³ mol. When the amount exceeds 1x10⁻¹ mol relative to 1 mol of alkenyl groups in the component A, the finally obtained cured product (adhesive layer) is likely to undergo yellowing and the transparency of the cured product (adhesive layer) tends to be damaged. When the amount of the component C formulated is too low, the composition curing speed is slow, and the curing quality tends to be unstable; therefore, the amount is preferably not less than 8.9x10⁻⁵ mol, more preferably not less than 1.8x10⁻⁴ mol.

The composition comprising the above-described components A to C is cured by heating. That is, the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby curing is completed. The cured product is characterized by the ability to exhibit its tacky characteristic (function to adhere to other object) even without addition, or with addition of a small amount, of an adhesiveness-imparting resin. It has low activity, and does not react upon contact with various substances such as water, metal, plastic material and the like.

In a composition comprising components A to C, it is preferable that the hydrosilyl groups of the component B (compound B) be contained (formulated) so that the functional group ratio to the alkenyl groups of the component A (compound A) will be not less than 0.3 and less than 2, more preferably not less than 0.4 and less than 1.8, and still more preferably not less than 0.5 and less than 1.5. When the hydrosilyl groups are contained so that the foregoing functional group ratio will exceed 2, the crosslinking density increases, and it is sometimes impossible to obtain adhesiveness without the addition, or with the addition of a small amount, of an adhesiveness-imparting resin. When the functional group ratio is less than 0.3, crosslinking in the cured product becomes too weak, and retention of characteristics at high temperatures may become difficult. Hence, by setting a blending ratio of the component A and the component B to fall within a particular range, good adhesiveness composition can be achieved even without adding an adhesiveness-imparting resin and, in addition, a pressure-sensitive adhesive sheet can be obtained while curing the composition at a practically sufficiently fast line speed.

### (Non-halogen flame retardant)

In the present invention, the non-halogen flame retardant is a phosphorus flame retardant selected from phosphates, aromatic condensed phosphates and ammonium polyphosphates. Phosphorus flame retardants can impart flame retardancy and are superior in the suppression of drip during combustion, compatibility to environmental regulation and the like.

Specific examples of the phosphate include triphenyl phosphate, tricresyl phosphate (TCP), cresyl diphenyl phosphate (CDP), 2-ethylhexyldiphenyl phosphate, triethyl phosphate (TEP), tri-n-butyl phosphate, trixylenyl phosphate, xylenyl diphenyl phosphate (XDP) and the like. Specific examples of the aromatic condensed phosphate include resorcinol bisdiphenyl phosphate, bisphenol A bis(diphenyl phosphate), resorcinol bisdixylenyl phosphate and the like. Specific examples of the ammonium polyphosphate include ammonium polyphosphate (APP), melamine-modified ammonium polyphosphate and coated ammonium polyphosphate. Here, the coated ammonium polyphosphate is obtained by coating or microcapsulating ammonium polyphosphate with a resin to enhance water resistance. The phosphate, aromatic condensed phosphate and ammonium polyphosphate can be used concurrently. A combined use of phosphate and ammonium polyphosphate is preferable since flame retardancy in both the solid phase and gaseous phase can be achieved by a combination of a flame retardancy effect of a char layer formed by phosphate and a flame retardancy effect of noncombustible gas production by ammonium polyphosphate.

One or more kinds of the non-halogen flame retardants can be used in a mixture. While the amount thereof to be used varies depending on the kind of the flame retardant, it is generally preferably not less than 10 parts by weight, more preferably not less than 20 parts by weight, particularly preferably not less than 30 parts by weight, relative to 100 parts by weight of the adhesive, since the effects of flame retardancy, drip suppression by char layer formation and the like can be efficiently achieved. It is preferably not more than 350 parts by weight, more preferably not more than 250 parts by weight, particularly preferably not more than 150 parts by weight, since more superior adhesive property, preservability and the like can be obtained.

### (Tackifier resin)

The pressure-sensitive adhesive layer 1 containing a non-halogen flame retardant can contain a tackifier resin to improve adhesion of a gasket to an adherend and flame retardancy. Examples of the tackifier resin include terpene tackifier resin, phenol tackifier resin, rosin based tackifier resin, petroleum tackifier resin and the like. One or more kinds of tackifier resin can be used.

Examples of the terpene tackifier resin include terpene resins such as α-pinene polymer, β-pinene polymer, dipentene polymer and the like, modified terpene resins (e.g., terpenephenol resin, styrene-modified terpene resin, aromatic-modified terpene resin, hydrogenated terpene resin etc.) obtained by modifying (phenol-modification, aromatic-modification, hydrogenated-modification, hydrocarbon-modification etc.) these terpene resins, and the like.

Examples of the phenol tackifier resin include condensates (e.g., alkylphenol resin, xyleneformaldehyde resin and the like) of various phenols (e.g., phenol, m-cresol, 3,5-xylenol, p-alkylphenol, resorcin etc.) and formaldehyde, resol obtained by addition reaction of the aforementioned phenol with formaldehyde using an alkali catalyst, novolac obtained by condensation reaction of the aforementioned phenol with formaldehyde using an acid catalyst and the like.

Examples of the rosin based tackifier resin include unmodified rosin (natural rosin) such as gum rosin, wood rosin, tall oil rosin and the like, modified rosin (hydrogenated rosin, disproportionated rosin and polymerized rosin, and other chemically-modified rosin etc.) obtained by modifying the above unmodified rosins by hydrogenation, disproportionation, polymerization and the like, various rosin derivatives and the like. Examples of the aforementioned rosin derivative include rosin esters such as modified rosin ester compound obtained by esterifying modified rosin (rosin ester compound obtained by esterifying unmodified rosin with an alcohol, hydrogenated rosin, disproportionated rosin, polymerized rosin and the like) with an alcohol and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid modified rosin ester obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins (particularly, rosin esters) such as unmodified rosin, modified rosin, various rosin derivatives and the like; and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used.

Examples of the alcohol to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexahydric alcohols such as dipentaerythritol etc. and the like. These are used alone or in a combination of two or more kinds thereof.

Examples of the petroleum tackifier resin include known petroleum resins such as aromatic petroleum resin, aliphatic petroleum resin, alicyclic petroleum resin (aliphatic cyclic petroleum resin), aliphatic aromatic petroleum resin, aliphatic alicyclic petroleum resin, hydrogenated petroleum resin, coumarone resin, coumarone indene resin and the like. Specific examples of the aromatic petroleum resin include polymers using one or more kinds of vinyl group-containing aromatic hydrocarbon having 8 to 10 carbon atoms (styrene, o-vinyltoluene, m-vinyltoluene, p-vinyltoluene, α-methylstyrene, β-methylstyrene, indene, methylindene etc.) and the like. As the aromatic petroleum resin, an aromatic petroleum resin obtained from a fraction such as vinyltoluene, indene and the like (i.e., "C9 petroleum fraction") (namely, "C9 based petroleum resin") can be used preferably. Examples of the aliphatic petroleum resin include polymers obtained by using one or more kinds selected from dienes such as olefin having 4 or 5 carbon atoms (e.g., butene-1, isobutylene, pentene-1 etc.), butadiene, piperylene, 1,3-pentadiene, isoprene etc., and the like. Furthermore, as the aliphatic petroleum resin, an aliphatic petroleum resin obtained from a fraction such as butadiene, piperylene, isoprene and the like (i.e., "C4 petroleum fraction", "C5 petroleum fraction" etc.) (namely, "C4 based petroleum resin", "C5 based petroleum resin" etc.) can be used preferably. Examples of the alicyclic petroleum resin include an alicyclic hydrocarbon resin obtained by cyclization and dimerization of an aliphatic petroleum resin (i.e., "C4 based petroleum resin", "C5 based petroleum resin" etc.), followed by polymerization, a polymer of a cyclic diene compound (cyclopentadiene, dicyclopentadiene, ethylidenenorbornane, dipentene, ethylidenebicycloheptene, vinylcycloheptene, tetrahydroindene, vinylcyclohexene, limonene etc.) or a hydrogenated resin thereof, an alicyclic hydrocarbon resin obtained by hydrogenating the aromatic ring of the aforementioned aromatic hydrocarbon resin, the following aliphatic aromatic petroleum resin and the like. Examples of the aliphatic aromatic petroleum resin include a styrene-olefin copolymer and the like. In addition, as the aliphatic aromatic petroleum resin, a so-called "C5/C9 copolymerization petroleum resin" and the like can be used.

The tackifier resin is preferably terpene tackifier resin and/or rosin based tackifier resin, particularly preferably rosin based tackifier resin, from the aspect of flame retardancy of gasket. The terpene tackifier resin and rosin based tackifier resin easily provide effect as flame-retardant auxiliary agents. Using these, adhesion of a gasket to an adherend and flame retardancy of a gasket can be improved more remarkably. The terpene tackifier resin is particularly preferably a terpenephenol resin, the rosin based tackifier resin is particularly preferably rosin ester (i.e., esterified compound of unmodified rosin, hydrogenated rosin, disproportionated rosin or polymerized rosin), and the rosin ester is preferably trivalent or higher polyhydric alcohol ester, particularly preferably tetra to hexahydric polyhydric alcohol ester.

One or more kinds of the tackifier resins can be used in combination, and the amount thereof to be used is not particularly limited. However, it is preferably not less than 5 parts by weight, more preferably not less than 10 parts by weight, particularly preferably not less than 15 parts by weight, relative to 100 parts by weight of the adhesive, since it becomes a carbon source and sufficiently exhibits the effect of a phosphorus flame retardant as an auxiliary agent. From the aspects of maintenance of adhesive property, preservability, handling property, dispersibility and the like, it is preferably not more than 100 parts by weight, more preferably not more than 60 parts by weight, particularly preferably not more than 40 parts by weight.

The pressure-sensitive adhesive layer 1 can contain, where necessary, various additives such as plasticizer, filler made of glass fiber, glass bead, metal powder or other inorganic powder etc., pigment, colorant, antioxidant, UV absorber and the like.

In a gasket of an embodiment having a substrate sheet 4, the pressure-sensitive adhesive layer 1 can contain an adhesion promoter to further enhance adhesiveness to the substrate sheet 4. Examples of the adhesion promoter include various silane coupling agents, epoxy resin and the like. Of these, silane coupling agents having a functional group such as an epoxy group, a methacryloyl group, a vinyl group and the like are preferable since they are effective for expression of adhesiveness. In addition, a catalyst for reacting a silyl group and an epoxy group can be added concurrently with a silane coupling agent and an epoxy resin. In the case of containing a polyoxyalkylene adhesive (adhesive consisting of a cured product of a composition containing the above-mentioned components A - C), such catalyst should be selected in consideration of the influence on the curing reaction (hydrosilylation reaction) to produce the adhesive.

When a polyoxyalkylene adhesive (which is made of a cured product of a composition containing the above-mentioned components A - C) is used, it may contain a storage stability improving agent to improve the storage stability. As the storage stability improving agent, a compound commonly known as a storage stabilizer for the component B of the present invention can be used without limitation. For example, a compound comprising an aliphatic unsaturated bond, an organic phosphorus compound, an organic sulfur compound, a nitrogen-containing compound, a tin compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-butene-3-ol, 2-methyl-3-butene-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be included, but these are not to be construed as limiting.

While the thickness of the non-halogen flame retardant-containing adhesive layer 1 is not particularly limited, the total thickness of two non-halogen flame retardant-containing adhesive layers sandwiching the nonporous core film 2 is preferably 200 - 1400 µm, more preferably 400 - 1200 µm, from the aspects of level difference absorbability, sealing property and the like. The layer thickness of the two non-halogen flame retardant-containing adhesive layers sandwiching the nonporous core film 2 may be the same or different, but is preferably the same so that the cost can be reduced by simplification of the production steps.

The total thickness of the non-halogen flame retardant-containing adhesive sheet 5 is preferably 210 µm or above, more preferably 400 µm or above, in view of the level difference absorbability, sealing property and the like. It is preferably 1450 µm or above, more preferably 1200 µm or above, to facilitate winding in a roll state and prevent degradation of processability.

### (Substrate sheet)

The gasket may comprise a substrate sheet 4. In an embodiment having the substrate sheet 4, the substrate sheet 4 is formed to impart self-supporting property to the pressure-sensitive adhesive sheet 10 to improve setting workability of gasket as well as more strictly prevent contact of water and the like to an adherend. That is, when the pressure-sensitive adhesive face of the pressure-sensitive adhesive sheet directly contacts an adherend, water and the like absorbed by the pressure-sensitive adhesive sheet contacts the adherend during long-term use of the gasket. When the adherend is a metal member without an anticorrosion treatment and the like, the metal member may corrode or may be discolored to impair desired function of the adherend. As shown in Fig. 2, therefore, a surface 2A of the substrate sheet 4 laminated on one surface 5B of the pressure-sensitive adhesive sheet 5 is closely adhered to an adherend 21, from the two adherends 20, 21 to be closely adhered to the gasket, which requires protection from corrosion and discoloration at higher levels.

Therefore, as the substrate sheet 4, a film having not only heat resistance required of a gasket but also superior water-repellency, and/or comprising a material having high resistance to moisture permeability is preferable. For example, plastic films made of fluororesins such as polytetrafluoroethylene (PTFE), polychlorotrifluoroethylene (PCTFE), polyvinylidene fluoride (PVDF), polyvinyl fluoride (PVF), perfluoroalkoxyfluororesin (PFA), tetrafluoroethylene hexafluoropropylene copolymer (FEP), ethylene tetrafluoroethylene copolymer (ETFE), ethylene chlorotrifluoroethylene copolymer (ECTFE) and the like, are preferable, a fluororesin sheet is particularly preferable, and a polytetrafluoroethylene (PTFE) sheet is especially preferable.

The thickness of the substrate sheet 4 is preferably 30 - 200 µm, more preferably 80 - 150 µm, to achieve good adhesion of a gasket to an adherend and improved detach workability for maintenance.

In addition, the surface of the substrate sheet 4 on the side of the pressure-sensitive adhesive sheet 5 is preferably subjected to a corona treatment, a sputter treatment, a sodium treatment and the like for the improvement of adhesiveness between the pressure-sensitive adhesive sheet and the substrate sheet, and two or more of these surface treatments can be performed in combination.

### [Primer layer]

In the present invention, a primer layer 6 is formed on a surface (at least one surface) of the nonporous core film 2 of the non-halogen flame retardant-containing adhesive sheet 5, as shown by the gasket 10' in Fig. 3. Since formation of the primer layer 6 enhances a binding force between the nonporous core film 2 and the non-halogen flame retardant-containing adhesive layer 1, the tight-sealing property of the gasket against liquid such as water and the like can be further improved. In addition, generation of a gap between the core film 2 and the non-halogen flame retardant-containing adhesive layer 1 can be prevented at a higher level during winding of a gasket after production in a roll state (production of roll state gasket) and placing a gasket, pulled out (rewound) from the roll state gasket, between two mating surfaces. The primer layer 6 can be formed not only on one surface of the nonporous core film 2 but also on both surfaces of the nonporous core film 2. When the gasket has a substrate sheet 4, the primer layer 6 is preferably formed on one surface of the nonporous core film 2, which is on the opposite side from the substrate sheet 4 side, as shown in Fig. 3. When the primer layer 6 is formed on one surface opposite from the substrate sheet 4 side, the core film 2 is not separated from the non-halogen flame retardant-containing adhesive layer 1 adhered to the adherend during detachment of the gasket from the adherend, but the non-halogen flame retardant-containing adhesive layer 1 on the substrate sheet 4 side is detached from the core film 2. As a result, the non-halogen flame retardant-containing adhesive layer 1 is not left on the adherend, but the non-halogen flame retardant-containing adhesive layer 1 and the core film 2 are left in integration. Consequently, the non-halogen flame retardant-containing adhesive layer 1 remaining in the adherend can be easily removed by detaching therefrom.

While the primer layer is not particularly limited as long as it can enhance the binding force between the nonporous core film 2 and the non-halogen flame retardant-containing adhesive layer 1, it is, for example, polyester polyurethane; chlorinated hydrocarbon resin such as chlorinated polypropylene and the like; acrylic polymer or the like, with preference given to polyester polyurethane. While the polyester polyurethane is not particularly limited, it is, for example, obtained by urethane modification of polyester having two or more hydroxy groups with a polyisocyanate compound (bifunctional or more isocyanate compound).

The urethane modification include, for example, dissolving a polyester having two or more hydroxy groups in an organic solvent unreactive with polyisocyanate compounds, adding a polyisocyanate compound, adding, as necessary, a reaction catalyst such as an amine compound, an organic metal compound and the like, and heating the mixture.

Examples of the polyester having two or more hydroxy groups used for producing polyester polyurethane include polyester obtained by reacting dibasic acids such as terephthalic acid, isophthalic acid, adipic acid, azelaic acid, sebacic acid and the like or a dialkylester thereof or a mixture thereof with glycol such as ethylene glycol, propylene glycol, diethylene glycol, butylene glycol, neopentyl glycol, 1,6-hexanediol, 3-methyl-1,5-pentanediol, 3,3'-dimethylolheptane, polyoxyethylene glycol, polyoxypropylene glycol, polytetramethylene ether glycol and the like or a mixture thereof; and polyester obtained by ring opening polymerization of lactone such as polycaprolactone, polyvalerolactone, poly (β-methyl-γ-valerolactone) and the like. Two or more kinds of these may be used.

Examples of the polyisocyanate compound used for the production of polyester polyurethane include alicyclic, aromatic and aliphatic diisocyanate compounds. For example, as the alicyclic diisocyanate, cyclohexane-1,4-diisocyanate, isophoronediisocyanate, norbornanediisocyanate, dicyclohexylmethane-4,4'-diisocyanate, 1,3-bis(isocyanatemethyl)cyclohexane, methylcyclohexanediisocyanate and the like can be mentioned.

As the aromatic diisocyanate, 1,5-naphthylenediisocyanate, 4,4'-diphenylmethanediisocyanate, 4,4'-diphenyldimethylmethanediisocyanate, 4,4'-dibenzylisocyanate, dialkyldiphenylmethanediisocyanate, tetraalkyldiphenylmethanediisocyanate, 1,3-phenylenediisocyanate, 1,4-phenylenediisocyanate, tolylene diisocyanate, xylylene diisocyanate, m-tetramethylxylylene diisocyanate and the like can be mentioned.

As the aliphatic diisocyanate, butane-1,4-diisocyanate, hexamethylene diisocyanate, isopropylene diisocyanate, methylene diisocyanate, 2,2,4-trimethylhexamethylene diisocyanate, lysine diisocyanate, dimer diisocianate wherein carboxyl group of dimer acid is converted to isocyanate group and the like can be mentioned.

As the polyisocyanate compound, a trifunctional or more polyisocyanate compound such as an adduct, isocyanurate, burette and the like can also be used. Diisocyanate compound is one of the preferable embodiments of the polyisocyanate compound since it is not gelled easily.

One or more kinds of polyester polyurethane can be used in combination.

The thickness of the primer layer is preferably 0.1 - 10 µm, more preferably 0.5 - 5 µm. Such thickness can sufficiently enhance the binding force between the nonporous core film 2 and the non-halogen flame retardant-containing adhesive layer 1.

The production method of a pressure-sensitive adhesive sheet 5 containing a non-halogen flame retardant is not particularly limited, and a general production method of both faces pressure-sensitive adhesive sheets can be applied. A pressure-sensitive adhesive sheet containing a non-halogen flame retardant, which uses an acrylic adhesive, can be produced by a method including, for example, mixing a photopolymerizable composition comprising a monomer for a base polymer main backbone, a copolymerizable monomer, a radical polymerization initiator, a crosslinking agent and the like with a non-halogen flame retardant, applying same on one surface of a nonporous core film to form a coated film having a given thickness, adhering a peel treated face of a release sheet thereon, irradiating UV thereon to progress a polymerization reaction to form one non-halogen flame retardant-containing adhesive layer 1, and forming the other non-halogen flame retardant-containing adhesive layer 1 on the other surface of the nonporous core film. When the pressure-sensitive adhesive layer contains a tackifier resin and other additives, they only need to be mixed with a photopolymerizable composition together with a non-halogen flame retardant.

A non-halogen flame retardant-containing adhesive sheet using a silicone adhesive can be produced by a method including applying a silicone adhesive containing a non-halogen flame retardant and the like on one surface of a nonporous core film 2 to form a coated film having a given thickness, adhering a peel treated face of a release sheet thereon, drying same by heating in a given manner to form one non-halogen flame retardant-containing adhesive layer 1, and forming the other non-halogen flame retardant-containing adhesive layer 1 on the other surface of the nonporous core film 2. When the pressure-sensitive adhesive layer contains a tackifier resin and other additives, they only need to be mixed with a silicone adhesive together with a non-halogen flame retardant.

A pressure-sensitive adhesive sheet containing a non-halogen flame retardant, which uses an acrylic adhesive, and a pressure-sensitive adhesive sheet containing a non-halogen flame retardant, which uses a silicone adhesive, can be produced by appropriately using a general release agent such as silicone release agent, fluorine release agent and the like for the detach treatment of a release sheet.

A pressure-sensitive adhesive sheet containing a non-halogen flame retardant can be produced by, for example, the following method. First, the aforementioned components A - C and non-halogen flame retardant (Component D) are charged in a stirring apparatus provided with a vacuum function together with an organic solvent as necessary, and defoamed by stirring in a vacuum state (in vacuo) to give a defoamed mixture (composition). When a tackifier resin and other additives are contained in a pressure-sensitive adhesive sheet containing a non-halogen flame retardant, a tackifier resin and other additives are added together with the above-mentioned components A - D to give a mixture (composition). Then, a composition (mixture) containing components A - D after the defoaming treatment is applied on one surface of a nonporous core film to form a coated film with a desired thickness. A detach-treated surface of a release sheet is adhered thereto, and a given heat treatment is applied to cure the composition (mixture) containing components A - D. The curing reaction is completed since the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby the other non-halogen flame retardant-containing adhesive layer can be formed. Furthermore, the other non-halogen flame retardant-containing adhesive layer is formed on the other surface of the nonporous core film.

The mixture can be applied to for example, a commonly known coating apparatus such as a gravure coater; a roll coater such as a kiss coater or a comma coater; a die coater such as a slot coater or a fountain coater; a squeeze coater, a curtain coater and the like. Regarding the heat treatment conditions in this case, it is preferable that the composition be heated at 50 to 200°C (preferably 100 to 160°C) for 0.01 to 24 hours (preferably 0.05 to 4 hours). As the above-described stirrer with vacuum function, a commonly known stirrer equipped with vacuum apparatus may be used; specifically, a planetary (revolution type/rotation type) stirring defoaming apparatus, a defoaming apparatus equipped with a disperser, and the like can be included. The degree of pressure reduction in performing vacuum defoaming is preferably not more than 10 kPa, more preferably not more than 3 kPa. Stirring time varies also depending on the choice of stirrer and the throughput of fluidized product, and is generally preferably 0.5 to 2 hours. Due to the defoaming treatment, the resulting adhesive layer is substantially free of a void, and high transparency can be achieved.

Release agent include silicone type release treatment agent, fluoride type release treatment agent, long chain alkyl type release treatment agent etc. can be applied to the support surface. Of these, a silicone type release treatment agent is preferable. As the curing method, a curing method such as UV irradiation, electron beam irradiation and the like are preferably used. Furthermore, of the silicone type release treatment agents, a cation polymerizable UV curing silicone type release treatment agent is preferable. A cation polymerizable UV curing silicone type release treatment agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curing silicone type release treatment agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd.

Of the cationic polymerizable silicones, polyorganosiloxane comprising the following structural units (A) - (C) is particularly preferable.

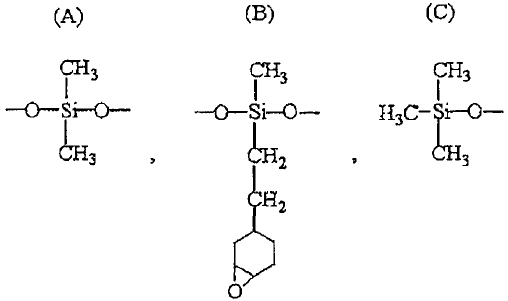

In polyorganosiloxane comprising such structural units (A) - (C), the composition ratio ((A):(B):(C)) of structural units (A) - (C) is particularly preferably 50 - 95:2 - 30:1 - 30 (mol%), and especially preferably 50 - 90:2 - 20:2 - 20 (mol%). Polyorganosiloxane comprising such structural units (A) - (C) is available as Poly200, Poly201, RCA200, X-62-7622, X-62-7629 and X-62-7660.

On the other hand, as the onium salt photoinitiator, a known product can be used without particular limitation. Specific examples include a compound represented by (R¹)₂I⁺X⁻, ArN₂⁺X⁻ or (R¹)₃S⁺X⁻ (wherein R¹ is alkyl group and/or aryl group, Ar is aryl group, X⁻ is [B(C₆H₅)₄]⁻, [B(C₆F₅)₄]⁻, [B(C₆H₄CF₃)₄]⁻, [(C₆F₅)₂BF₂]⁻, [C₆F₅BF₃]⁻, [B(C₆H₃F₂)₄]⁻, BF₄⁻, PF₆⁻, AsF₆⁻, HSO₄⁻, ClO₄⁻ and the like). Of these, a compound of the formula (boron photoinitiator) wherein X⁻ is [B(C₆H₅)₄]⁻, [B(C₆F₅)₄]⁻, [B(C₆H₄CF₃)₄]⁻, [(C₆F₅)₂BF₂]⁻, [C₆F₅BF₃]⁻, [B(C₆H₃F₂)₄]⁻ or BF₄⁻ is preferable, and a compound represented by (R¹)₂I⁺[B(C₆F₅)₄]⁻ (wherein R¹ is substituted or unsubstituted phenyl group) (alkyl iodonium, tetrakis(pentafluorophenyl)borate) is particularly preferable. As the onium salt photoinitiator, antimony (Sb) initiator is conventionally known. However, when an antimony (Sb) initiator is used, peel strength becomes heavier and peeling of transparent pressure-sensitive adhesive sheet from the release sheet tends to be difficult.

While the amount of the onium salt photoinitiator to be used is not particularly limited, it is preferably 0.1 - 10 parts by weight relative to 100 parts by weight of the cationic polymerizable silicone (polyorganosiloxane). When the amount of use is smaller than 0.1 part by weight, curing of the silicone release layer may become insufficient. When the amount of use is greater than 10 parts by weight, the cost becomes impractical. When a cationic polymerizable silicone (polyorganosiloxane) and an onium salt photoinitiator are mixed, the onium salt photoinitiator may be dissolved or dispersed in an organic solvent and then mixed with polyorganosiloxane. Specific examples of the organic solvent include alcohol solvents such as isopropyl alcohol, n-butanol and the like; ketone solvents such as acetone, methylethyl ketone and the like; ester solvents such as ethyl acetate, and the like, and the like.

A detach treatment agent can be applied, for example, using a general coating apparatus such as those used for roll coater method, reverse coater method, doctor blade method and the like. While the coating amount (solid content) of the detach treatment agent is not particularly limited, it is generally 0.05 - 6 mg/cm².

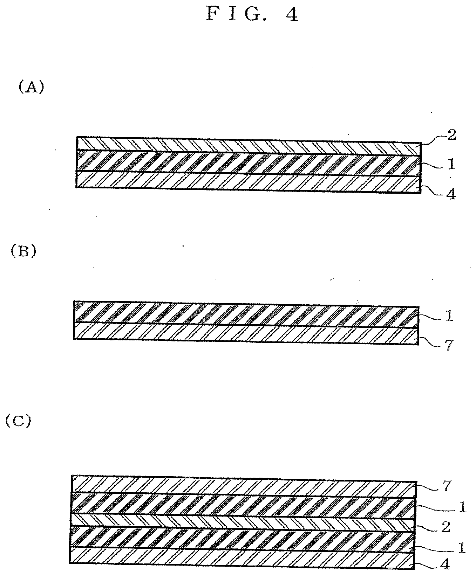

When a gasket having a substrate sheet 4 is produced, the following method shown in Fig. 4 is preferable.

First, a non-halogen flame retardant-containing adhesive layer 1 is formed on one surface of a substrate sheet 4, and a nonporous core film 2 is adhered to the non-halogen flame retardant-containing adhesive layer 1 (Fig. 4(A)).

A release sheet 7 is prepared, and the non-halogen flame retardant-containing adhesive layer 1 is formed on one surface of the release sheet 7 (Fig. 4(B)).

The non-halogen flame retardant-containing adhesive layer 1 formed on one surface of the above-mentioned release sheet 7 is press adhered to one surface of the core film 2 (adhesive layer non-formed surface) (Fig. 4(C)). The press condition therefor is preferably 0.5 - 5 kgf/cm².

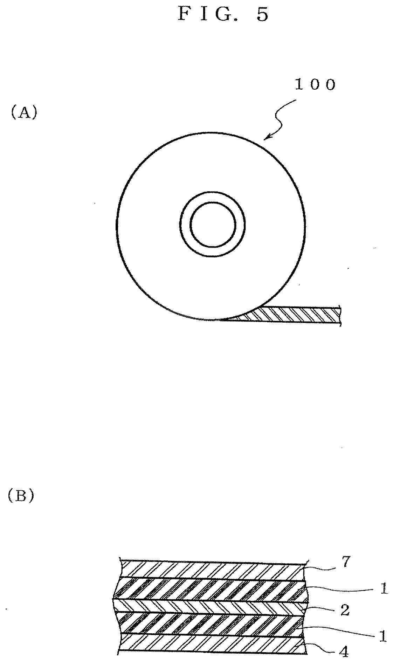

As shown in Fig. 5(A) and Fig. 5(B), the gasket before placing between two mating surfaces is preferably stored as a roll-like product (roll state gasket) 100. In this case, a substrate sheet 4 with the back face (one surface of the substrate sheet 4 on the opposite side of the non-halogen flame retardant-containing adhesive sheet 5) subjected to a peel treatment is used.

In the present invention, a gasket is placed between opposing faces of two adherends (i.e., two mating surfaces) by generally interposing a gasket between two mating surfaces and the two adherends are bolted and the like.

The gasket of the present invention can be used for sealing property of two opposing faces of machines, instruments and structures in various technical fields. For example, it can be used for mounting various instruments and equipments on the outer board (body) of airframes and vehicles of aircrafts, cars, electric trains and the like, for structures where two members are fixed with their surfaces opposing with each other (i.e., forming two opposing faces) in airframes and vehicles of aircrafts, cars, electric trains and the like, and the like. Particularly, since the gasket has high flame retardancy and does not corrode metals, it is particularly advantageous as a material for aircrafts.

When the gasket of the present invention is produced using a pressure-sensitive adhesive sheet containing a non-halogen flame retardant comprising a polyoxyalkylene adhesive, the adhesive force (release force) increases with time after adhesion of a pressure-sensitive adhesive face of the pressure-sensitive adhesive sheet to an adherend. As a result, more superior sealability can be afforded. Moreover, since the adhesive force (release force) does not increase excessively even after long-term adhesion to the adherend, the gasket can be easily separated from the adherend for maintenance.

A pressure-sensitive adhesive layer containing a non-halogen flame retardant using a polyoxyalkylene adhesive shows a shear storage elastic modulus (G') at -30°C of not more than 6.0×10⁵ (Pa), preferably not more than 5.5×10⁵ (Pa). The shear storage elastic modulus (G') is known as an index of the hardness of viscoelastic body. Since a pressure-sensitive adhesive layer containing a non-halogen flame retardant using a polyoxyalkylene adhesive shows a shear storage elastic modulus (G') at -30°C of not more than 6.0×10⁵ (Pa), and does not become rigid at low temperatures, it is considered to maintain high flexibility even at a temperature below zero. In consideration of the time-temperature reduction rule, a highspeed deformation at a certain temperature is influenced by the property of a viscoelastic body at a lower temperature. Therefore, the discussion of an adhesive force at -30°C should take into consideration viscoelastic behavior at a lower temperature. The pressure-sensitive adhesive sheet containing a non-halogen flame retardant using a polyoxyalkylene adhesive in the gasket of the present invention also shows a shear storage elastic modulus at -50°C of not more than 6.0×10⁵. Therefore, the adhesion stability at a lower temperature is considered to be highly superior. The "shear storage modulus (G')" here is measured by the following method.

### [Shear storage modulus (G')]

Plural samples are prepared by forming an adhesive layer on a release-treated surface of a release sheet, and the obtained adhesive layers are adhered to each other to give a laminate having a thickness of 0.5 - 1 mm. The laminate is cut into a disc having a diameter of 7.9 mm and used as a sample for the measurement using the following apparatus and conditions.
measurement apparatus: ARES manufactured by Rheometric Scientific Inc.
measurement condition: measurement temperature -30°C and -50°C
measurement frequency 1Hz (6.28 rad/sec)

The present invention is explained in more detail in the following by referring to Examples and Comparative Examples. Only Examples 2 and 8 are in accordance with the present invention. The property evaluation (test) of the gasket material in the Examples and Comparative Examples was performed according to the following methods.

### 1. Water stop test

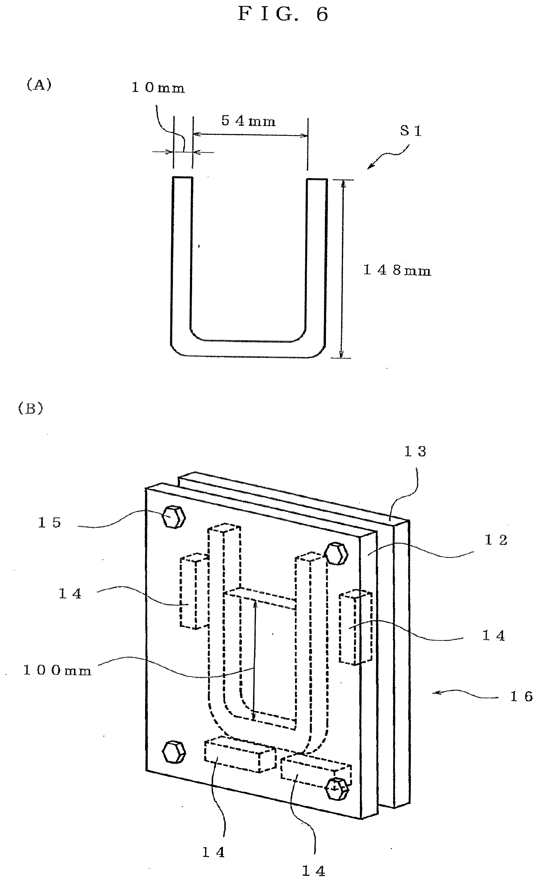

(1) A prepared gasket was stored in a room temperature environment (temperature: 20±15°C, relative humidity: 65±20% RH) for 24 hr.
(2) The gasket after storage was punched out into a sample S1 with a U-shaped flat plane (width 10 mm, height 148 mm, distance between both ends 54 mm) shown in Fig. 6(A). An aluminum board and an acrylic board each having a rectangular flat plane shape (length 160 mm x width 160 mm x thickness 10 mm) were prepared and, as shown in Fig. 6(B), the sample S1 was placed between an aluminum board 12 and an acrylic board 13, and four corners of two pieces of aluminum board were tightened with a bolt 15, whereby the sample S1 was fixed while being compressed by 15% in the thickness direction between the aluminum board 12 and the acrylic board 13 to give a test sample 16. The test sample 16 was left standing in a room temperature environment (temperature: 20±15°C, relative humidity: 65±20% RH) for 24 hr. In the Figure, symbol 14 is a cuboid spacer made of aluminum, and the distance between the aluminum board 12 and the acrylic board 13 is adjusted by the thickness of the spacer.
(3) As shown in Fig. 6(B), water was supplied up to the height of 100 mm from the lowermost part of the inside of the U-shaped sample S1 compression immobilized between the aluminum board 12 and the acrylic board 13 in the test sample 16, left standing in a room temperature environment for 3 hr, and the amount of water leakage from the inside of the U-shape was measured as the distance.

That is, the height of the water surface after the test (height of water surface from the lowermost part of the inside of U-shaped sample S1 3 hr after start of test) was measured, and the amount of water leakage was measured by the following formula as the distance.

Amount of water leakage (mm) = initial water surface height (100 (mm)) - water surface height (mm) after test

### 2. Combustion test

Performed according to UL STANDARD "UL-94".

To be specific, 3 kinds of samples (length 5 inch × width 1 inch, thickness maximum, thickness minimum, and thickness medium) were prepared, and subjected to the test under the following conditions. Five samples each for thickness maximum, minimum and medium were prepared, and a total of 15 samples were subjected to the test.
test atmosphere: air
firing: 10 seconds
test procedure: after flame contact for 10 seconds, test flame was removed and the flaming time and glowing time were recorded. When the fire ceased within 30 seconds, flame contact was performed for 10 seconds.

### (Evaluation criteria)

Evaluated on grades (5VA, 5VB, V-0, V-1, V-2, HB) according to UL STANDARD "UL-94".

### 3. Metal corrosiveness (color change)

A 1 inch×1 inch gasket was adhered to a copper plate, and left standing under humidified conditions (40°C×92%RH atmosphere) for 100 hr. The copper plate was taken out from the humidified conditions, the gasket was peeled off, the surface of the plate was observed and the presence or absence of discoloration was visually confirmed.

In the evaluation, the absence of discoloration is good (○), presence of slight discoloration is pass (Δ), and remarkable discoloration is failure (×).

### 4. Salt spray test

A 2 inch x 2 inch gasket was adhered on a 3 inch x 3 inch duralumin panel, and set on a salt spray testing machine (manufactured by Suga Test Instruments Co., Ltd.) at an angle of 60 degrees. It was left standing at temperature 35°C (+1.1-1.7) while being sprayed with 5% salt water at 1.5 ml/80 cm²/hr for 3000 hr. After the test, the gasket was peeled off and the area where color change or destruction occurred (corrosion area) in the adhesion area was determined (that is, ratio of area of color change or destruction (corrosion area) to adhesion area was determined).

A ratio of corrosion area of less than 5% was good (○), a ratio of corrosion area of 5% or above and less than 10% was pass (Δ), and a ratio of corrosion area of 10% or above was failure (x).

### 5. Halogen content

Measured according to JISK0127.

Detection of not less than 5 ppm of halogen such as Cl, Br and the like is failure (×), and detection amount of less than 5 ppm is pass (○).

### Example 1 (reference example)

A thermosetting cold liquid resin (manufactured by Kaneka Corporation, trade name "ACX022") (100 parts by weight) made from terminal allylation polyoxypropylene wherein an allyl group is bonded to the both terminals of polypropylene glycol having an average molecular weight of about 28000 is mixed with rosin pentaerythritol (10 parts by weight), which is a tackifier resin, heated to 100°C and stirred for 30 min. After confirmation of transparency of the mixture, dissolution of the tackifier resin in the thermosetting cold liquid resin was confirmed. Thereto were added a curing catalyst (0.05 part by weight), which is made of a solution of platinum/1,3-divinyltetramethyldisiloxane complex in 2-propanol (complex concentration 3%, manufactured by N.E. CHEMCAT CORPORATION, product name "3% Pt-VTS-IPA solution"), a curing agent (7.65 parts by weight), which is made of a hydrogensiloxane compound having 5 hydrosilyl groups on average in a molecule (manufactured by Kaneka Corporation, trade name "CR500"), and tricresylphosphate (TCP) (20 parts by weight), which is a flame retardant, and the mixture was stirred. Thereafter, the mixture was defoamed under reduced pressure to remove air bubbles formed during stirring to give a uniform composition.

The above-mentioned adhesive composition was applied to a PTFE sheet with a thickness of 135 µm such that the thickness after heat treatment was 400 µm, the sheet was heat-treated at 130°C for 10 min, and a 20 µm-thick polypropylene film was laminated thereon to give a first adhesive sheet.

In addition, the above-mentioned adhesive composition was applied to a release-treated surface of a release sheet made of a poly(ethylene terephthalate) film such that the thickness after heat treatment was 400 µm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to the polypropylene film of the first adhesive sheet to complete a gasket.

### Example 2 (example in accordance with the invention)

In the same manner as in Example 1 except that a primer layer having a thickness of 3 µm, which was made from polyester polyurethane (manufactured by LORD Far East, Inc. "Chemlok459X"), was formed on the polypropylene film of the first adhesive sheet before adhesion of the second adhesive sheet to the first adhesive sheet, a gasket was prepared.

### Example 3 (reference example)

To lauryl methacrylate (100 parts by weight) were added 2,2-dimethoxy-1,2-diphenylethan-1-one (photoinitiator, trade name "IRGACURE 651" manufactured by BASF) (0.05 part by weight) and 1-hydroxy-cyclohexyl-phenyl-ketone (photoinitiator, trade name "IRGACURE 184" manufactured by BASF) (0.05 part by weight), the mixture was supplied into a four-mouthed flask, and partially photopolymerized by exposure to UV under a nitrogen atmosphere to give a monomer syrup (partial polymer) having a polymerization rate of 7%. The monomer syrup contains a prepolymer having a molecular weight (Mw) of 6,000,000. The monomer syrup (100 parts by weight) was uniformly mixed with 1,6-hexanedioldiacrylate (trade name "NKester A-HD": manufactured by Shin-Nakamura Chemical Co., Ltd.) (0.08 part by weight) and tricresylphosphate (TCP) (70 parts by weight), which is a flame retardant, and defoamed to give a photopolymerizable composition (photocurable composition). After 24 hr from the preparation of the photopolymerizable composition, the photopolymerizable composition was applied to a PTFE sheet having a thickness of 135 µm, such that the thickness after heat treatment was 400 µm, and a polypropylene film having a thickness of 20 µm was laminated thereon. UV was irradiated at an luminance of 5 mW/cm² using a black-light lamp (manufactured by Toshiba Lighting & Technology Corporation) from the outside of both the PTFE sheet and the polypropylene film for a time sufficient for the polymerization rate to reach 99% to allow light curing of the polymerizable composition layer to form an elastic form (adhesive layer), whereby the first adhesive sheet was formed.

The above-mentioned photopolymerizable composition was applied to a release-treated surface of a release sheet made of a poly(ethylene terephthalate) film such that the thickness after light curing was 400 µm, a release-treated surface of a release sheet made of a poly(ethylene terephthalate) film was laminated thereon. UV was irradiated at an luminance of 5 mW/cm² using a black-light lamp (manufactured by Toshiba Lighting & Technology Corporation) from the outside of two pieces of the release sheet made of a poly(ethylene terephthalate) film for a time sufficient for the polymerization rate to reach 99% to allow light curing of the polymerizable composition layer to form an elastic form (adhesive layer), whereby the second adhesive sheet was formed.

The release sheet of the second adhesive sheet was detached to expose the adhesive layer, and the adhesive layer was adhered to the polypropylene film of the first adhesive sheet to complete a gasket.

### Example 4 (reference example)

The adhesive composition described in Example 1 was applied to a PTFE sheet with a thickness of 135 µm such that the thickness after heat treatment was 400 µm, the sheet was heat-treated at 130°C for 10 min, and a 20 µm-thick poly(ethylene terephthalate) was laminated thereon to give a first adhesive sheet. In addition, the adhesive composition described in Example 1 was applied to a release-treated surface of a release sheet made of a poly(ethylene terephthalate) film such that the thickness after heat treatment was 400 µm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to poly(ethylene terephthalate) of the first adhesive sheet to complete a gasket.

### Example 5 (reference example)

The adhesive composition described in Example 1 was applied to a PTFE sheet with a thickness of 135 µm such that the thickness after heat treatment was 400 µm, the sheet was heat-treated at 130°C for 10 min, and a 60 µm-thick polypropylene film was laminated thereon to give a first adhesive sheet. In addition, the adhesive composition described in Example 1 was applied to a release-treated surface of a release sheet made of a poly(ethylene terephthalate) film such that the thickness after heat treatment was 400 µm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to the polypropylene film of the first adhesive sheet to complete a gasket.

### Example 6 (reference example)

The adhesive composition described in Example 1 was applied to a PTFE sheet with a thickness of 135 µm such that the thickness after heat treatment was 500 µm, the sheet was heat-treated at 130°C for 10 min, and a 20 µm-thick polypropylene film was laminated thereon to give a first adhesive sheet. In addition, the adhesive composition described in Example 1 was applied to a release-treated surface of a release sheet made of a poly(ethylene terephthalate) film such that the thickness after heat treatment was 500 µm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to the polypropylene film of the first adhesive sheet to complete a gasket.

### Example 7 (reference example)

The adhesive composition described in Example 1 was applied to a PTFE sheet with a thickness of 135 µm such that the thickness after heat treatment was 300 µm, the sheet was heat-treated at 130°C for 10 min, and a 20 µm-thick polypropylene film was laminated thereon to give a first adhesive sheet.

In addition, the adhesive composition described in Example 1 was applied to a release-treated surface of a release sheet made of a poly(ethylene terephthalate) film such that the thickness after heat treatment was 300 µm, the sheet was heat-treated at 130°C for 10 min, and a release-treated surface of a release sheet made of a poly(ethylene terephthalate) film was laminated thereon to give a second adhesive sheet.

The release sheet of the second adhesive sheet was detached to expose the adhesive layer, and the adhesive layer was adhered to the polypropylene film of the first adhesive sheet to complete a gasket.

### Example 8 (example in accordance with the invention)

In the same manner as in Example 1 except that the amount of the tackifier resin (rosin pentaerythritol) was changed to 20 parts by weight, the first and second adhesive sheets were formed. In the same manner as in Example 2, a gasket having a primer layer having a thickness of 3 µm, which is made from polyester polyurethane ("Chemlok459X" manufactured by LORD Far East, Inc.), was interposed between the first adhesive sheet and the second adhesive sheet was prepared.

### Example 9 (reference example)

In the same manner as in Example 8 except that the primer layer was not used, a gasket was prepared.

### Comparative Example 1

A composition containing a urethane resin solution, multifunctional isocyanate, and hexacyclobromododecane (20 parts by weight per 100 parts by weight of the total amount of urethane resin solution and multifunctional isocyanate component) was applied on a release-treated surface of a 50 µm-thick release sheet made from polytetrafluoroethylene (PTFE), and heat-treated at 100°C for 2 min to form an adhesive sheet having a 600 µm-thick adhesive layer. Then, a mesh sheet (10 mesh) made from polyvinyl chloride was applied on a mesh sheet of the above-mentioned composition, and heat-treated at 100°C for 2 min to form a 400 µm-thick adhesive layer, whereby a gasket was completed.

The adhesive sheets prepared in Examples 1 - 9 and Comparative Example 1 were subjected to the aforementioned test. The results are shown in Table 1.

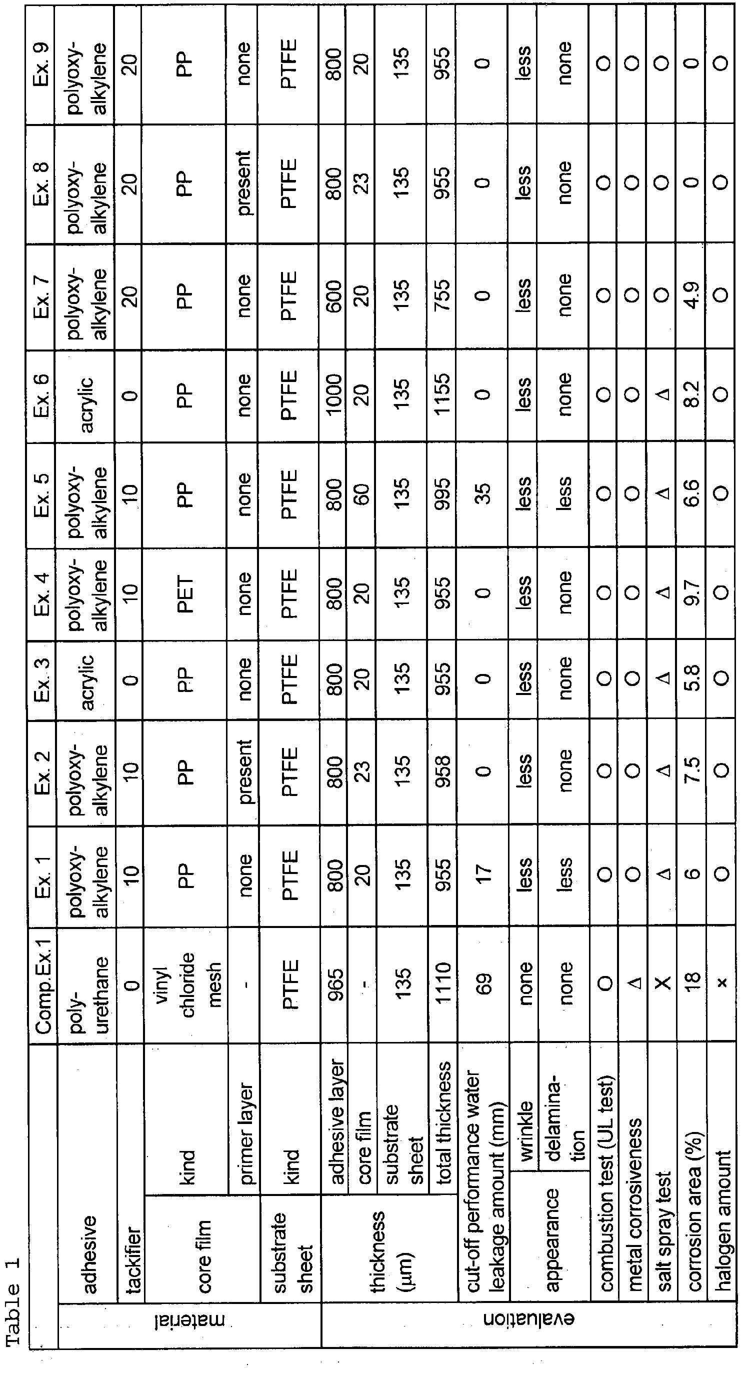

As is clear from Table 1, the gaskets of Examples 1 - 9 have superior flame retardancy, do not contain a halogen atom, and achieve a flame retardant gasket that can suppress corrosion of metal low when it contacts the metal. Particularly, Examples 4 - 9 clearly afforded high-performance gaskets that do not corrode metal in contact therewith and show extremely high flame retardancy.

## Claims

1. A gasket mainly comprising a non-halogen flame retardant-containing adhesive sheet, wherein
at least one surface of the gasket is an adhesive face of the aforementioned non-halogen flame retardant-containing adhesive sheet,
the aforementioned non-halogen flame retardant-containing adhesive sheet is an adhesive sheet wherein a non-halogen flame retardant-containing adhesive layer/a nonporous core film/a non-halogen flame retardant-containing adhesive layer are laminated in this order,
a primer layer is formed on at least one surface of the nonporous core film, and
the non-halogen flame retardant is a phosphorus flame retardant selected from phosphates, aromatic condensed phosphates and ammonium polyphosphates.

2. The gasket according to claim 1, wherein the nonporous core film comprises a plastic film.

3. The gasket according to claim 1, wherein the primer layer is polyester polyurethane.

4. The gasket according to claim 1, wherein the nonporous core film has a thickness of 10 - 70 µm.

5. The gasket according to claim 1, wherein a substrate sheet is laminated on one surface of the non-halogen flame retardant-containing adhesive sheet,
one surface of the gasket is a surface of the substrate sheet, and the other surface of the gasket is an adhesive face of the non-halogen flame retardant-containing adhesive sheet.

6. The gasket according to claim 5, wherein the substrate sheet is a fluororesin sheet.

7. The gasket according to claim 1, wherein both faces of the gasket comprise an adhesive face of the non-halogen flame retardant-containing adhesive sheet.

8. The gasket according to claim 1, wherein the non-halogen flame retardant-containing adhesive layer comprises a tackifier resin.

9. The gasket according to claim 8, wherein the tackifier resin is a terpene tackifier resin and/or a rosin tackifier resin.

10. The gasket according to claim 1, wherein the non-halogen flame retardant-containing adhesive layer is a non-halogen flame retardant-containing polyoxyalkylene adhesive layer.

11. The gasket according to claim 10, wherein the non-halogen flame retardant-containing polyoxyalkylene adhesive layer is a cured product layer of a composition comprising the following components A - D:
A: a polyoxyalkylene polymer having at least one alkenyl group in one molecule
B: a compound containing two or more hydrosilyl groups on average in one molecule
C: a hydrosilylation catalyst
D: a non-halogenated flame retardant.

12. A method of tightly sealing two opposing faces, comprising placing the gasket according to claim 1 between the two opposing faces.

## Patentansprüche

1. Dichtung, die hauptsächlich eine halogenfreie, Flammhemmer-enthaltende Klebefolie umfasst, wobei
mindestens eine Oberfläche der Dichtung eine Klebeseite der zuvor genannten halogenfreien, Flammhemmer-enthaltenden Klebefolie ist,
die zuvor genannte halogenfreie, Flammhemmer-enthaltende Klebefolie eine Klebefolie ist, in der eine halogenfreie, Flammhemmer-enthaltende Klebeschicht/eine porenfreie Kernfolie/eine halogenfreie, Flammhemmer-enthaltende Klebeschicht in dieser Reihenfolge laminiert sind,
eine Grundierungsschicht auf zumindest einer Oberfläche der porenfreien Kernfolie ausgebildet ist, und
der halogenfreie Flammhemmer ein Phosphor-Flammhemmer ist, der aus Phosphaten, aromatischen kondensierten Phosphaten und Ammoniumpolyphosphaten gewählt wird.

2. Dichtung nach Anspruch 1, wobei die porenfreie Kernfolie eine Kunststofffolie umfasst.

3. Dichtung nach Anspruch 1, wobei die Grundierungsschicht Polyesterpolyurethan ist.

4. Dichtung nach Anspruch 1, wobei die porenfreie Kernfolie eine Dicke von 10-70 µm aufweist.

5. Dichtung nach Anspruch 1, wobei eine Substratfolie auf eine Oberfläche der halogenfreien Flammhemmer-enthaltenden Klebefolie laminiert wird,
eine Oberfläche der Dichtung eine Oberfläche der Substratfolie ist und die andere Oberfläche der Dichtung eine Klebeseite der halogenfreien Flammhemmer-enthaltenden Klebefolie ist.

6. Dichtung nach Anspruch 5, wobei die Substratfolie eine Fluorokunststofffolie ist.

7. Dichtung nach Anspruch 1, wobei beide Seiten der Dichtung eine Klebeseite der halogenfreien Flammhemmer-enthaltenden Klebefolie umfassen.

8. Dichtung nach Anspruch 1, wobei die halogenfreie Flammhemmer-enthaltende Klebeschicht ein Klebrigmacher-Kunstharz umfasst.

9. Dichtung nach Anspruch 8, wobei das Klebrigmacher-Kunstharz ein klebrigmachendes Terpenharz und/oder ein klebrigmachendes Kolophoniumharz ist.

10. Dichtung nach Anspruch 1, wobei die halogenfreie Flammhemmer-enthaltende Klebeschicht eine halogenfreie Flammhemmer-enthaltende Polyoxyalkylen-Klebeschicht ist.

11. Dichtung nach Anspruch 10, wobei die halogenfreie Flammhemmer-enthaltende Polyoxyalkylen-Klebeschicht eine gehärtete Produktschicht mit einer Zusammensetzung ist, welche die folgenden Komponenten A - D umfasst:
A: ein Polyoxyalkylen-Polymer mit mindestens einer Alkenylgruppe in einem Molekül
B: eine Zusammensetzung, die im Durchschnitt zwei oder mehr Hydrosilylgruppen in einem Molekül enthält
C: einen Hydrosilylierungskatalysator
D: einen halogenfreien Flammhemmer.

12. Verfahren zum festen Abdichten von zwei gegenüberliegenden Flächen, umfassend das Platzieren der Dichtung nach Anspruch 1 zwischen den zwei gegenüberliegenden Flächen.

## Revendications

1. Joint d'étanchéité comprenant principalement une feuille d'adhésif contenant un agent ignifugeant non halogéné, dans lequel
au moins une surface du joint d'étanchéité est une face adhésive de la feuille d'adhésif contenant un agent ignifugeant non halogéné susmentionnée,
la feuille d'adhésif contenant un agent ignifugeant non halogéné susmentionnée est une feuille d'adhésif dans laquelle une couche d'adhésif contenant un agent ignifugeant non halogéné / un film de cœur non poreux / une couche d'adhésif contenant un agent ignifugeant non halogéné sont stratifiés dans cet ordre,
une couche d'apprêt est formée sur au moins une surface du film de cœur non poreux, et
l'agent ignifugeant non halogéné est un agent ignifugeant au phosphore choisi parmi les phosphates, les phosphates condensés aromatiques et les polyphosphates d'ammonium.

2. Joint d'étanchéité selon la revendication 1, dans lequel le film de cœur non poreux comprend un film plastique.

3. Joint d'étanchéité selon la revendication 1, dans lequel la couche d'apprêt est un polyester polyuréthane.

4. Joint d'étanchéité selon la revendication 1, dans lequel le film de cœur non poreux a une épaisseur de 10 à 70 µm.

5. Joint d'étanchéité selon la revendication 1, dans lequel une feuille de substrat est stratifiée sur une surface de la feuille d'adhésif contenant un agent ignifugeant non halogéné,
une surface du joint d'étanchéité est une surface de la feuille de substrat, et l'autre surface du joint d'étanchéité est une face adhésive de la feuille d'adhésif contenant un agent ignifugeant non halogéné.

6. Joint d'étanchéité selon la revendication 5, dans lequel la feuille de substrat est une feuille de résine fluorée.

7. Joint d'étanchéité selon la revendication 1, dans lequel les deux faces du joint d'étanchéité comprennent une face adhésive de la feuille d'adhésif contenant un agent ignifugeant non halogéné.

8. Joint d'étanchéité selon la revendication 1, dans lequel la couche d'adhésif contenant un agent ignifugeant non halogéné comprenant une résine tackifiante.

9. Joint d'étanchéité selon la revendication 8, dans lequel la résine tackifiante est une résine tackifiante de type terpène et/ou une résine tackifiante de type colophane.

10. Joint d'étanchéité selon la revendication 1, dans lequel la couche d'adhésif contenant un agent ignifugeant non halogéné est une couche d'adhésif polyoxyalkyléné contenant un agent ignifugeant non halogéné.

11. Joint d'étanchéité selon la revendication 10, dans lequel la couche d'adhésif polyoxyalkyléné contenant un agent ignifugeant non halogéné est une couche de produit durci d'une composition comprenant les composants A à D suivants :
A : un polymère de polyoxyalkylène ayant au moins un groupe alcényle par molécule,
B : un composé contenant en moyenne deux ou plus de deux groupes hydrosilyle par molécule,
C : un catalyseur d'hydrosilylation,
D : un agent ignifugeant non halogéné.

12. Procédé pour sceller fermement deux faces opposées, comprenant le placement du joint d'étanchéité selon la revendication 1 entre les deux phases opposées.
